# EUROPÄISCHE PATENTSCHRIFT

(11) **EP 3 245 035 B1**
(45) Veröffentlichungstag und Bekanntmachung des Hinweises auf die Patenterteilung: **30.10.2019**
(21) Anmeldenummer: 16703710.0
(22) Anmeldetag: 15.01.2016
(51) Int. Cl.: B29B 9/04, B30B 5/06, B29B 7/74, B29B 7/82, B29B 7/10, B29K 27/06

(54) **VERFAHREN UND VORRICHTUNG ZUR HERSTELLUNG EINES THERMOPLASTISCHEN GRANULATES**
METHOD AND DEVICE FOR PRODUCING THERMOPLASTIC PELLETS
PROCÉDÉ ET DISPOSITIF DE PRODUCTION DES GRANULES DE MATIÈRE THERMOPLASTIQUE

(30) Priorität: 16.01.2015 DE 102015000262
(43) Veröffentlichungstag der Anmeldung: 22.11.2017
(73) Patentinhaber: IPCO Germany GmbH, 70736 Fellbach (DE)
(72) Erfinder: VOITH, Bernhard, 73113 Ottenbach (DE); MAUE, Frank, 66482 Zweibrücken (DE)
(74) Vertreter: Fürst, Siegfried
(86) Internationale Anmeldenummer: PCT/EP2016/000066
(87) Internationale Veröffentlichungsnummer: WO 2016/113137

(56) Entgegenhaltungen:
- EP-A2- 0 235 794
- EP-A2- 0 483 780
- EP-A2- 0 544 645
- WO-A2-98/21272
- WO-A2-2013/071327
- DE-A1- 2 530 904
- DE-A1- 3 546 215
- DE-A1- 3 604 888
- JP-A- 2008 284 729

## Beschreibung

Die Erfindung betrifft ein Verfahren und eine Vorrichtung zur Herstellung eines thermoplastischen Granulates, wobei die Ausgangsstoffe zunächst in einem Heiz-Kühlmischer zu einem rieselfähigen Pulvergemisch vermischt werden, folgend vom Pulvergemisch ein formstabiler Körper erzeugt und dann aus dem formstabilen Körper durch Zerkleinern das thermoplastische Granulat hergestellt wird.

Aus dem Stand der Technik ist bekannt, dass zur Herstellung eines thermoplastischen Granulates zunächst die Ausgangsstoffe wie thermoplastische Kunststoffpulver, Zuschlagstoffe, Weichmacher, Farbstoffe, Gleitmittel, Füllstoffe, Additive usw. in einem ersten Mischer, einem Heizmischer, unter Erwärmung gut durchgemischt und miteinander vermischt werden, wobei die Erwärmung durch die mechanische Energie des Rührens beim Durchmischen/Vermischen erzeugt wird. Danach wird das im ersten Mischer erzeugte Gemisch in einen an den Heizmischer angeschlossenen zweiten Mischer, einem sogenannten Kühlmischer, überführt und in der Art weiter gerührt, dass die Temperatur des Gemisches unterhalb dessen Erweichungstemperatur bleibt und das Gemisch die Umgebungstemperatur erreicht und ein rieselfähiges pulverförmiges Gemisch als Zwischen-Substrat erzeugt wird; wie z.B. bei einem Verfahren und einer Vorrichtung zum Herstellen von Zwischenprodukten für faserverstärkte thermoplastische Formteile nach der DE 36 04 888 A1.

Heiz-Kühlmischer sind seit vielen Jahrzehnten bekannt, z.B. aus der DE 69 43 436 U, der DE 74 19 997 U, der DE 77 03 279 U, der DE 1 956 241 B oder der DE 25 59 177 C3.

Diese Heiz-Kühlmischer können, unter anderem, doppelwandig oder mit Kühl-Heizschlangen ausgestattet sein, um gegebenenfalls, z.B. mittels eines flüssigen Mediums, die Innentemperatur zu steuern oder zu regeln, damit das in ihnen aus den Ausgangsstoffen hergestellte pulverförmige Gemisch stets eine prozessoptimierte Temperatur hat.

Aus dem Stand der Technik ist weiterhin bekannt, dass solche Mischungen - wie oben beschrieben, also rieselfähige, pulverförmige Gemische - nach dem/den Heiz-Kühlmischern in Extruder überführt werden (siehe hierzu DE 1 679 865 Spalte 2 Zeilen 5 bis 15), um einen formstabilen Körper, ein Zwischenprodukt, zu erzeugen. Aus diesem Zwischenprodukt, dem formstabilen Körper, wird dann das thermoplastische Granulat hergestellt; hierzu ist dem bzw. den Extrudern ein Granulator, ein Zerkleinerer, nachgeschaltet. Das so gewonnene Granulat wird dann einem Lager zugeführt, dort sortenrein in verschiedenen Behältern gelagert, um es bei Bedarf für einen weiteren Produktionsprozess - in der Regel für die Herstellung eines Endproduktes - abzurufen. Unter sortenrein lagern wird verstanden, dass die hergestellten thermoplastischen Granulate unterschieden nach zumindest der Farbe und/oder Korngröße und/oder Kornform sortiert gelagert werden.

Aus diesen, unter Verwendung von Extrudern nacheinander oder parallel in mehreren Anlagen hergestellten, und in der Regel zwischengelagerten, verschiedenartigen, verschiedenförmigen und/oder verschiedenfarbigen Granulaten wird/kann in einer weiteren Herstellungsanlage/Produktionsanlage ein gewünschtes thermoplastisches Endprodukte, z.B. ein Flächengebilde mit granitartiger mehrfarbiger Struktur, erzeugt werden.

Ein typisches thermoplastisches Endprodukt ist z.B. auch eine mit einem Verfahren und einer Vorrichtung nach der EP 0 544 645 A2 hergestellte schmelzimprägnierte thermoplastische Langfaser-Glasmatte.

Oder auch eine thermoplastische Bahn, welche auf einer Doppelbandpresse (wie z.B. einer Thermofix-Presse) hergestellt wird. Ein solches Herstellungsverfahren und eine dafür verwendete Doppelbandpresse (Thermofix-Presse) ist in der Literatur vielfach bekannt und damit dem Fachwissen zuzurechnen; es ist z.B aus der EP 1 045 751 B1 bekannt.

Im Rahmen der vorliegenden Anmeldung wird unter einer thermoplastischen Bahn ein bahnförmiger Körper verstanden, der wenigstens thermoplastische Materialteilchen enthält, welche im Herstellungsprozess untereinander und miteinander und - soweit vorhanden - mit Zuschlagsstoffen thermofixiert sind. Die Zuschlagstoffe besitzen in der Regel die Form von Granulaten, faserförmigen oder stabförmigen oder plättchenförmigen, kugel- oder quaderförmigen Materialteilchen oder die Form von Geflechten; die Zuschlagstoffe können teilweise auch flüssig sein.

Weil bei den vorgenannten bahnförmigen Endprodukten, den thermoplastischen Bahnen, welche in der Regel z.B. zu Belagware, insbesondere Bodenbelag, Kunststofffliesen und dergleichen Ware oder Verkleidungselemente konfektioniert werden, oft ein gepunktetes oder gesprenkeltes oder strukturiert gemustertes Aussehen gewünscht ist, ist es bei der Herstellung der thermoplastischen Bahn in einer Doppelbandpresse wichtig, dass die auf das in der Regel umlaufende, untere (Förder-) Band aufgestreuten thermoplastischen Materialteilchen (Granulate) im Herstellungsprozess nur angeschmolzen und verdichtet werden und bezüglich ihrer horizontalen Position möglichst wenig beeinflusst werden, keinesfalls aber mit benachbarten Teilchen durchmischt werden. Solche Durchmischungen lassen sich in anderen bekannten Techniken zur Herstellung von thermoplastischen Bahnen, wie zum Beispiel beim Kalandrieren, Walzen oder Breitschlitzextrusion, verfahrensbedingt nicht verhindern.

Würde man nicht mit verschiedenförmigen bzw. mit verschiedenfarbigen thermoplastischen Materialteilchen / Granulaten oder mit zu stark vermischten thermoplastischen Materialteilchen/Granulaten arbeiten, so ergäbe sich in der hergestellten thermoplastischen Bahn nur ein Mischfarbton und nicht das gepunktete oder gesprenkelte Aussehen bzw. das strukturierte Muster. Eine solche nicht gewollte thermoplastische Bahn ist z.B. ein mit einem Verfahren nach der DE 35 46 215 A1 hergestelltes gefärbtes homogenes Flächengebilde aus thermoplastischen Kunststoffen. Bei diesem Verfahren wird als Zwischensubstrat kein Gemisch aus thermoplastischen Granulaten verwendet, sondern eine Mischung von feinkörnigen Partikel, welche durch Schleifen hergestellt und thermisch vorbehandelt werden. Zudem ist dieses Verfahren kostenaufwändig; zum einen wegen der Herstellung der feinkörnigen Partikel mittels Schleifen, zum anderen wegen der zusätzlichen thermischen Behandlung dieser Partikel vor deren Verarbeitung zum Endprodukt und des Weiteren wegen dem zusätzlichen Vorrichtungsaufwand zum Abführen des beim Schleifen anfallenden Schleifstaubes.

Da nach dem Stand der Technik bei der Herstellung der Granulate mit Extrudern gearbeitet wird, ist ein hoher Energieeinsatz erforderlich und die Extruder unterliegen zudem auch einem hohen Verschleiß, welche die Herstellungskosten und somit die Gesamtkosten des hergestellten Endproduktes in die Höhe treiben.

Zudem kann der Einsatz bestimmter Ausgangsstoffe, insbesondere der von Füllstoffen mit abrasiven Eigenschaften, die Herstellung des thermoplastischen Granulates unrentabel machen, da die Extruder einem erhöhten Verschleiß ausgesetzt sind. Bei der Verwendung von Füllstoffen mit abrasiven Eigenschaften ist noch nachteilig, dass unbedingt eine schonende und entmischungsfreie Beschickung des Extruders erfolgen muss, was wiederum eine erhöhte Herstellungszeit bewirkt und eine aufwändigere Beschickungsvorrichtung erfordert; also letztendlich die Kosten für die Herstellung des Endproduktes erhöht.

Ausgehend von dem vorgenannten Stand der Technik, mit seinen Nachteilen, besteht die Aufgabe der Erfindung darin, die Herstellung des thermoplastischen Granulates zu optimieren, insbesondere die Produktionskosten zu senken. Eine Nebenaufgabe ist die Verbesserung des thermoplastischen Materials hinsichtlich seiner Eigenschaften und/oder seiner Vielfalt in der Farbgestaltung, was positiv auf und für die eingangs genannten Endprodukte wirkt.

Die Aufgabe wird erfindungsgemäß durch ein Verfahren zur Herstellung eines thermoplastischen Granulates mit den Merkmalen des Anspruches 1 sowie durch eine Anlage zur Herstellung eines thermoplastischen Granulates mit den Merkmalen des Anspruches 7 gelöst. Die nachgeordneten, abhängigen Ansprüche 2 bis 6 offenbaren Ausführungsvarianten des erfindungsgemäßen Verfahrens und die abhängigen Ansprüche 8 und 9 Ausführungsvarianten der erfindungsgemäßen Anlage.

Bei dem neuen Verfahren zur Herstellung von thermoplastischen Granulaten wird erfindungsgemäß auf den Einsatz eines oder mehrerer Extruder total verzichtet. Die Herstellung eines formstabilen Körpers, aus welchen durch Zerkleinerung das thermoplastische Granulat erzeugt wird, erfolgt nach der Erfindung unter Verwendung einer Anlage zur Herstellung eines Endproduktes, vornehmlich unter Verwendung einer Anlage zur Herstellung einer thermoplastischen Bahn, insbesondere unter Verwendung einer Doppelbandpresse, vorzugsweise unter Verwendung einer so genannten Thermofix-Anlage (Thermofix-Presse). Der Vorteil des erfindungsgemäßen Verfahrens besteht zum einen darin, dass hohe Produktionskosten, welche bei Verwendung von Extrudern entstehen würden, vermieden werden und zum anderen darin, dass in einer Doppelbandpresse zur Herstellung einer thermoplastischen Bahn der besagte formstabile Körper, also der Grundkörper für die Erzeugung des thermoplastischen Granulates durch Zerkleinerung, gegenüber dem bekannten Verfahren in wesentlich mehr Varianten hinsichtlich der Farbe und seiner Eigenschaften hergestellt werden kann.

Im Speziellen ist nach der Erfindung vorgesehen, dass das in dem ersten Verfahrensabschnitt mittels dem Heiz-Kühlmischer erzeugte rieselfähige thermoplastische Zwischensubstrat, das pulverförmige Gemisch, in einer Doppelbandpresse (Thermofix-Presse) zunächst zu einem formstabilen Körper, einem bahnförmigen Zwischenprodukt eines bestimmten Typs geformt wird.

Der Begriff " bestimmten Typs" bedeutet im Rahmen der Erfindung, dass das bahnförmige Zwischenprodukt - in einem Querschnitt gesehen - einfarbig ist oder in seiner horizontalen oder seiner vertikalen Ausdehnung mehrere, zueinander abgegrenzte verschiedenfarbige Farbschichten aufweist. Der Übergang von einer Farbschicht zur benachbarten Farbschicht kann dabei abrupt sein, oder der Übergang zwischen zwei benachbarten Farbschichten ist fließend.

Das bahnförmige Zwischenprodukt wird dann in einem speziellen Zerkleinerer zu einem in seiner äußeren Form definierten thermoplastischen Granulat zerkleinert. Der oder die Zerkleinerer sind Schneidvorrichtungen, Häcksler, Mühlen oder dergleichen Vorrichtungen.

Weitere Einzelheiten, Merkmale und Vorteile der Erfindung werden in dem folgenden Beschreibungsteil genannt und näher erläutert und sind zudem in Verbindung mit der Beschreibung und den schematisiert dargestellten Ausführungsbeispielen der Erfindung offenbart. Es zeigen:
- Figur 1: in einem Schema-Bild den Ablauf des Verfahrens zur Herstellung eines thermoplastischen Granulates nach der Erfindung, sowie eine neuen Anlage für das Verfahren;
- Figur 2: eine Ausführungsvariante des neuen Verfahren nach Figur 1 nebst der Anlage zur Verfahrensdurchführung;
- Figur 3: ein Detail aus der Figur 2;
- Figur 4;: ein Detail aus der Figur 1;
- Figur 5: ein Detail aus der Figur 2
und
- Figur 6: ein Detail aus der Figur 5.

Zunächst wird vorausgeschickt, dass Begriffe wie "links", "rechts", "oben" oder "unten" sich lediglich auf die Darstellung in den Figuren beziehen, aber von der tatsächlichen Anordnung in der Praxis abweichen können. Weiterhin wird darauf hingewiesen, dass die Figuren keine reinen technischen Zeichnungen sind, weshalb teilweise Schraffuren und Abbruchlinien fehlen. Auch können die relativen Dimensionen von der Wirklichkeit abweichen. In der Beschreibung nicht erwähnte Bezugszeichen ergeben sich aus der Bezugszeichenliste. Die Bezugszeichen haben in allen Figuren die gleiche Bedeutung.

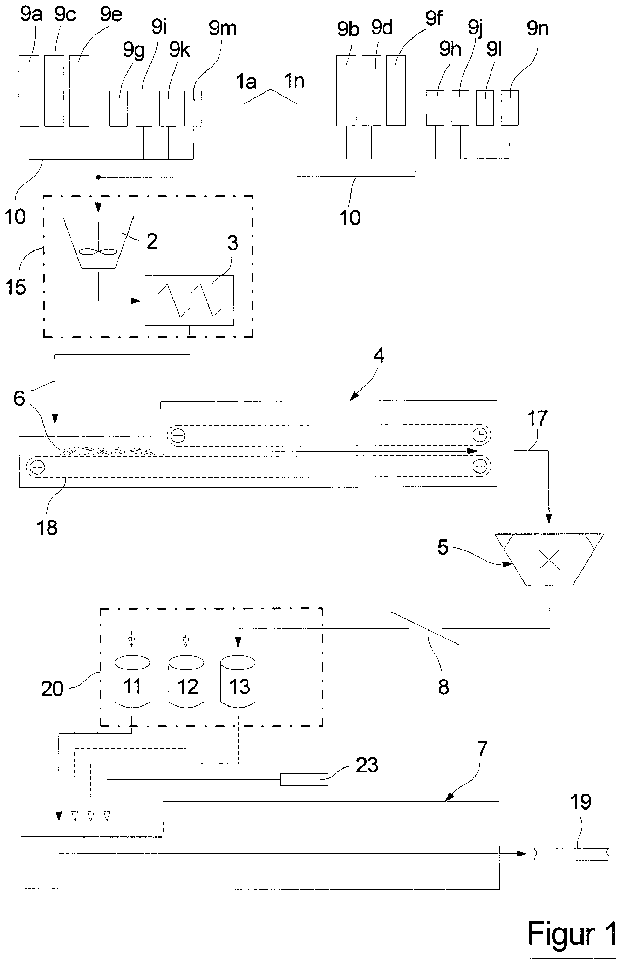

Die schematische Darstellung in Figur 1 zeigt, dass die Ausgangsstoffe 9 für die Herstellung eines thermoplastischen Granulates 11, 12 oder 13 in individuellen Behältern 1a...1n bevorratet sind. Diese Ausgangsstoffe 9 sind beispielsweise unterschiedliche Kunststoffpulver 9a und 9b, unterschiedliche Zuschlagstoffe 9c und 9d, unterschiedliche Weichmacher 9e und 9f, unterschiedliche Farbstoffe 9g und 9h, unterschiedliche Gleitmittel 9i und 9j, unterschiedliche Füllstoffe 9k und 9l und/oder unterschiedliche Additive 9m und 9n. Ein häufig in der Praxis vorkommender Ausgangsstoff für Kunststoffpulver sind PVC (Polyvinylchlorid) und andere Polymere.

Über ein Rohrleitungssystem 10 - beispielsweise mit integrierten Förderschnecken - werden zunächst die von den Ausgangsstoffe 9a...9n für einen ersten Typ/Sorte von thermoplastischem Granulat ausgewählten Ausgangsstoffe, das erste Kunststoffpulver 9a, der erste Zuschlagstoffe 9c, der zweite Weichmacher 9f, der erste Farbstoff 9g, der erste Füllstoff 9k und das zweite Additiv 9n einem ersten Mischer 2 zugeführt. Schon hier können die nach einer ersten Ausführungsvariante ausgewählten Ausgangsstoffe - nach einer ersten Variante des Mischens - in dem Verhältnis gemischt sein, wie es für das gewünschte thermoplastische erste Granulat 11 erforderlich ist.

Es können aber auch - nach einer zweiten Variante des Mischens im Herstellungsverfahren - hier im ersten Mischer 2 nur Anteile der endgültigen Zusammensetzung vorhanden sein.

Das Mischen in dem ersten Mischer 2 kann chargenweise - also diskontinuierlich - oder aber auch, in einem geeigneten ersten Mischer 2, kontinuierlich erfolgen. Die Drehzahlen der Rührflügel des ersten Mischers 2 werden so gewählt, dass sich das Gemisch von Ausgangsstoffen auf eine gewünschte Temperatur erwärmt. Aus dem ersten Mischer 2, dem Heizmischer, werden die gemischten Ausgangsstoffe einem zweiten Mischer 3, dem sogenannten Kühlmischer, zugeführt.

Hier werden in der Praxis die noch fehlenden Rezepturteile, z.B. weiterer Füllstoff zugeführt, um z.B. das Abkühlen zu unterstützen.

Zu dem ersten und dem zweiten Mischer 2 und 3 ist noch anzumerken, dass sie zusammen einen ersten Heiz-Kühlmischer 15 bilden.

Das genannte Vorgehen, also der Verfahrensabschnitt vom Befüllen des ersten Mischers 2 bis zur Ausgabe des rieselfähigen thermoplastischen Zwischensubstrat 6, des pulverförmigen Gemischs aus dem zweiten Mischer 3, hat sich als Standard etabliert, weil zum Beispiel dabei das Korn des thermoplastischen Polymers am besten durch den Weichmacher aufgeschlossen wird. Würde man diesen Verfahrensabschnitt einstufig durchführen, wäre u.a. die Aufnahme von Weichmachern oder Extendern in die Körner des thermoplastischen Polymers zu sehr behindert.

Beim Mischen der Ausgangsstoffe im zweiten Mischer 3 entsteht - auch bei einem nur geringen Förderdruck - eine Reibungs- oder Scherungswärme, die - sofern sie einen vorgegebenen Grenzwert übersteigt - abgeführt wird.

Beispielsweise gibt man in den ersten Mischer 2 nur die Hälfte der vorgesehenen Menge des/der Füllstoffe 9k und/oder 9l und die zweite Hälfte der vorgesehenen Menge der Füllstoffe 9k und/oder 9l dann in den zweiten Mischer 3. Diese zweite Hälfte der Menge an Füllstoffen ist quasi zugleich ein Kühlmittel.

Die Rieselfähigkeit des in dem Heiz-Kühlmischer 15 erzeugten thermoplastischen Zwischensubstrat 6 ist im Rahmen der Erfindung deshalb so wichtig, weil nach dem Heiz-Kühlmischer 15 selbiges 6 mittels eines an sich bekannten Streuers (in den Figuren nicht gezeichnet) auf das untere Band 18 einer Doppelbandpresse 4 gleichmäßig ausgebracht werden soll.

Das thermoplastische Zwischensubstrat 6, die gemischten Ausgangsstoffe 9, die auf das untere Band 18 einer Doppelbandpresse 4 ausgebracht werden, ergeben eine Sorte eines Granulates - ein erstes Granulat 11 -, welches erst später mit Granulaten 12 und/oder 13 anderer Sorten vermischt werden, um insgesamt ein gepunktetes oder gesprenkeltes oder strukturiert gemustertes Aussehen einer daraus herzustellenden thermoplastischen Bahn 19 zu erzeugen.

Der im Rahmen der Erfindung verwendete Begriff "eine Sorte" heißt aber nicht "nur eine bestimmte Farbe" eines Granulates, sondern auch ein bestimmter Glanz- oder Schmuck-Effekt. Zusätzlich können auch weitere physikalische Eigenschaften, wie z.B. Leitfähigkeit, Entflammbarkeit, Dichte, Kornform, Korngrößenverteilung etc. sortenbestimmend sein.

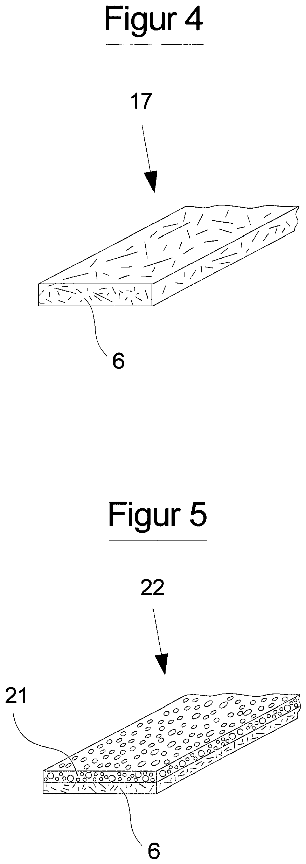

Das auf das untere Band 18 der Doppelbandpresse 4 aufgestreute Zwischensubstrat, hier in Figur 1 das pulverförmige Gemisch 6, wird im weiteren Verfahrensablauf in der Doppelbandpresse 4 in den zwischen den beiden umlaufenden Bändern gebildeten Spalt, in der mit einem Pfeil angedeuteten Förderrichtung, thermisch und mechanisch behandelt, wodurch ein Zwischenprodukt, ein formstabiler Körper 17, gebildet wird, welcher das Ende der Doppelbandpresse 4 verlässt. Dieser formstabile Körper 17, siehe Figur 4, wird schließlich in einem weiteren Verfahrensschritt zu dem thermoplastischen Granulat 11 verarbeitet. Hierzu ist ein Zerkleinerer 5 vorgesehen, welcher in dem in der Figur 1 gezeigten Ausführungsbeispiel vorzugsweise gleich der Doppelbandpresse 4 nachgeordnet ist.

Durch eine geeignete Wahl des Zerkleinerer, z.B. eine oder mehrere Schlagmühlen oder ein oder mehrere Bandgranulatoren, oder dergleichen Vorrichtungen) können die Korngrößen und die Korngrößenverteilung des herzustellenden thermoplastischen Granulates 11 beliebig und flexibel eingestellt werden.

Auch dieser Umstand ist gegenüber dem Herstellungsverfahren nach dem Stand der Technik, in welchem das Extrusionsverfahren angewendet wird, ein entscheidender Vorteil, weil bei der Extrusion breite Korngrößenverteilungen oder ein schneller und häufiger Wechsel der Korngröße mit zeitaufwändigen Konfigurationsänderungen des Extruders und anschließenden Mischschritten erzeugter Granulate verbunden wäre.

So entsteht durch das erfindungsgemäße Verfahren eine, z.B. farblich, einheitliche Sorte eines Granulates mit beliebig wählbarer Korngrößenverteilung, welches dann in ein Granulatlager 20 gegeben werden kann.

Wenn später dann eine thermoplastische Bahn 19 eines bestimmten Aussehens produziert werden soll, werden dann die erforderlichen Komponenten 23 und aus dem Zwischenlager, hier dem Granulatlager 20, die benötigten Zwischenprodukte, hier die Granulate abgerufen, gegebenenfalls in gewünschten Verhältnissen gemischt, und einer Doppelbandpresse für die Herstellung des Endprodukts zugeführt; im Ausführungsbeispiel nach der Figur 1 ist dies die zweite Doppelbandpresse 7.

Die Form des Kornes wird über den Pressenspalt und über die Wahl und Einstellung des bzw. der Zerkleinerer bestimmt.

Es ist leicht zu erkennen, dass mit dem erfindungsgemäßen Verfahren ein besonders hoher Gewinn an Flexibilität bezüglich des thermoplastischen Granulates und des Endproduktes erzielt wird.

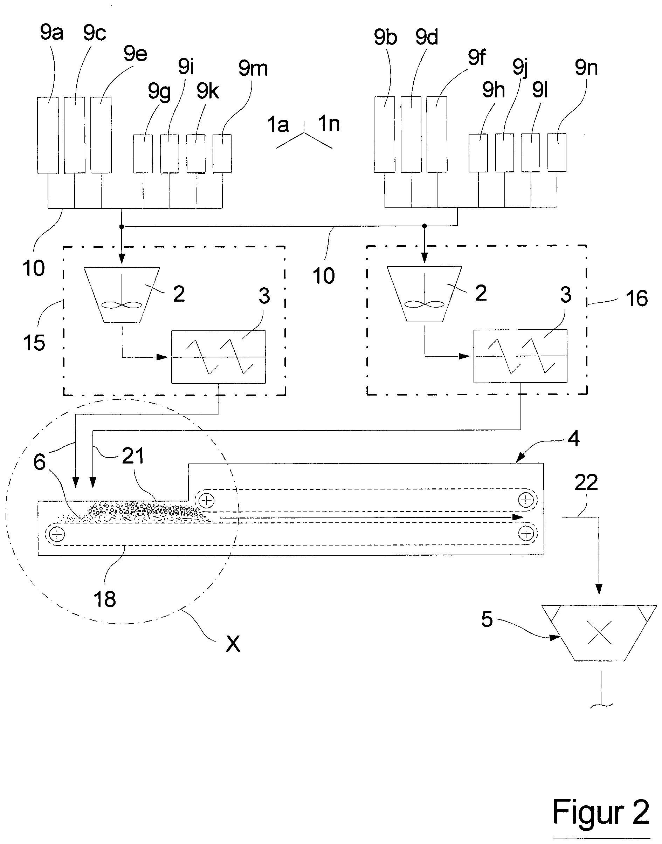

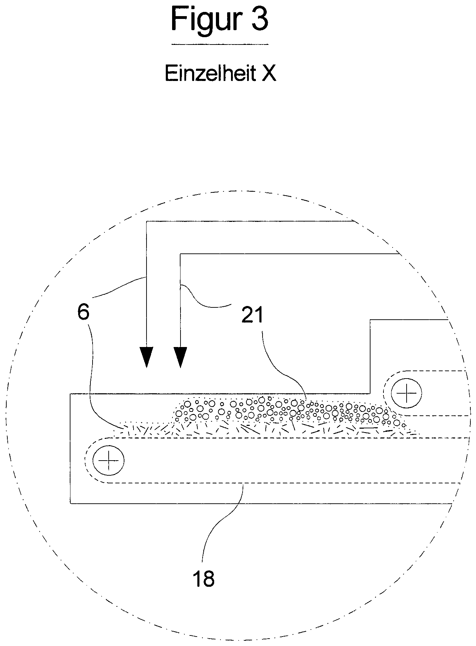

Eine weitere Ausführungsvariante des Verfahrens nach der Erfindung ist das Herstellen mehrfarbiger Granulate. Hierzu werden z.B. aus mehreren Heiz-Kühlmischern 15 und 16 , die parallel rieselfähige Zwischensubstrate 6, 21 verschiedener Farben produzieren, mehrere Schichten von Zwischensubstraten 6, 21 farblich abwechselnd aufeinander oder nebeneinander auf das untere Band 18 der Doppelbandpresse (Thermofixanlage) gestreut, siehe Figur 2 und Figur 3, und dann beim Durchlaufen der Doppelbandpresse 4 ein in vertikaler und/oder horizontaler Richtung mehrschichtiges und mehrfarbiges Flächengebilde als Zwischenprodukt erzeugt, der formstabile Körper 22, siehe auch Figur 5. Mit dem oben bereits genannten Zerkleinerungsvorgang 5 wird dann, vorzugsweise anschließend, das in sich mehrfarbige Granulat, mit scharf zueinander abgegrenzten Farbflächen, hergestellt.

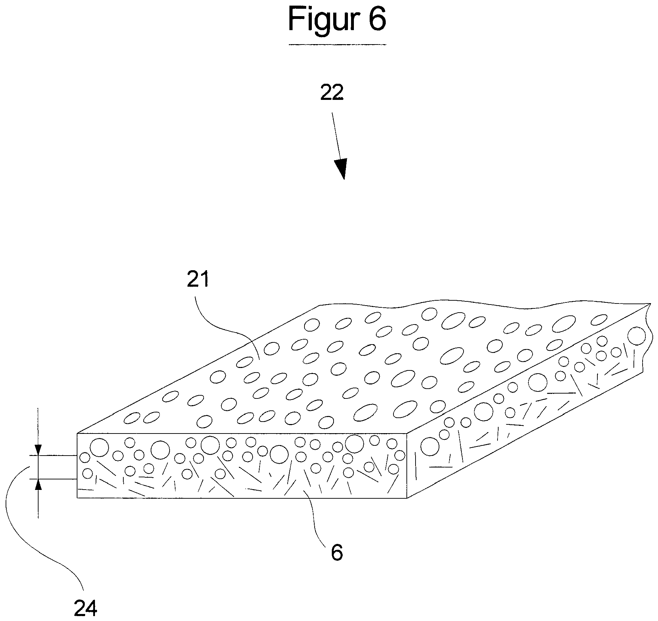

Nach einer weiteren Ausführungsvariante des Verfahrens nach der Erfindung kann auch thermoplastisches Granulat mit nicht scharfen, also zum Beispiel fließenden Farbgrenzen hergestellt werden, wie es in der Figur 6 beispielhaft mit der Grenzschicht 24 dargestellt ist. Hierzu wird vor der thermischen Verdichtung des rieselfähigen Zwischensubstrats 6, 21 in der Doppelbandpresse 4 mit mechanischen Mitteln, wie z.B. Bürstwalzen oder changierenden Rechen oder anderer geeigneter Störelemente, die laminare Schichtfolge der farblich unterschiedlichen Streulagen gezielt in vertikaler und/oder horizontaler Richtung teilweise bis weitgehend zerstört und somit farbliche Mischeffekt im entstehenden Flächengebilde, dem formstabilen Körper 22, erzielt. Die daraus gewonnenen Granulate zeigen dann sehr unterschiedliche farbliche Übergänge im einzelnen Korn. Mittels diesen, speziellen Granulaten lassen sich in einem Endprodukt, z.B. einer thermoplastischen Bahn 19 neuartige Dessinierungsmöglichkeiten erzielen.

Nach einer anderen Ausführungsvariante des Verfahrens nach der Erfindung werden die einsichtig oder mehrschichtig bzw. mehrspaltig auf das untere Band 18 aufgestreuten Zwischensubstrate, die pulverförmigen Gemische 6 und 21, auch noch in der Schmelzzone der Doppelbandpresse 4, oder nur dort, mittels Störelementen in ihrer Lage zueinander einmalig oder mehrmalig verschoben oder vermischt. Diese Störung in der Schmelzzone bewirkt insbesondere durch Einbringen von Scherkräften in geeigneten Viskositätsbereichen eine Verbesserung der mechanischen Eigenschaften des hergestellten Zwischenproduktes, der formstabilen Körper 17 bzw. 22 und somit letztendlich der Granulate 11, 12 und/oder 13.

Erfindungsgemäß sind die Störelemente vorzugsweise Mittel zum, bevorzugt partiellen, Vibrieren, Bürsten, Stacheln, Umpflügen, Kneten und dergleichen mechanischer Beeinflussung. Diese Störelemente sind i.V.m. und in Akzeptanz zu dem oberen Band der Doppelbandpresse 4 in, an oder bei selbiger angeordnet.

Da beim Zerkleinern der Bahn aus der Doppelbandpresse 4 auch viel Staub entstehen kann, ist es vorteilhaft, wenn vor dem Lagern des Granulates im Granulatlager 20, das Granulat noch in einer Siebeinrichtung 8 abgesiebt wird. Die staubförmigen Feinanteile werden nach einer Ausführungsvariante der Erfindung in den Prozess zurückgeführt, zum Beispiel als Füllstoffe in den zweiten Mischer 3, beispielsweise wenn dort sehr dunkle Farbvarianten erzeugt werden und deshalb der Farbausfall nicht gestört wird.

Ein weiterer Aspekt der Erfindung besteht auch darin, dass das Endprodukt 19 nicht auf einer separaten, zweiten Doppelbandpresse 7, sondern auch auf der ersten, der Doppelbandpresse 4 für die Herstellung des Granulates, hergestellt werden kann. Die Herstellung von Granulaten und die Herstellung von Endprodukten erfolgt in einem solchen Fall zeitlich versetzt nacheinander auf der einen Doppelbandpresse. Eine solche Doppelbandpresse besitzt hierzu Ergänzungs-Module (z.B. Streuer oder andere prozessbezogene Einheiten), die bezüglich der vorgesehenen Herstellung, also entweder Herstellung von Granulaten oder Herstellung von Endprodukten, wahlweise genutzt werden.

Ein anderer Aspekt der Erfindung ist, dass nach einer weiteren Ausführungsvariante des neuen Verfahrens nach der Herstellung des bzw. der rieselfähigen Zwischensubstrate, wiederum unter Umgehung/Nichtnutzung von Extrudern, auf einer (ersten) Doppelbandpresse ein gemusterter oder auch einfarbiger bahnförmiger formstabiler Körper hergestellt wird, wobei dieses erste oder weitere Zwischenprodukt am Ende einer Doppelbandpresse nicht zerkleinert wird, sondern als Fertigbahn oder auch als Teil, insbesondere als Halbzeug, für eine später herzustellende Bahn, welche gegebenenfalls weitere Material-Aufträge aufweist, dient. Nach einem weiteren Aspekt der Erfindung werden aus den erfindungsgemäß hergestellten formstabilen Körpern durch Stanzen, Schneiden, Drücken oder andere geeignete Trennverfahren beliebige Körper als Halbzeug und Zwischenprodukt hergestellt, zur Verwendung bei der Herstellung von einer Vielzahl von Produkten, welche nah bei oder weiter entfernt von den eingangs genannten Endprodukten liegen.

Die formstabilen Körper, also das erste Zwischenprodukt bzw. das/die weiteren Zwischenprodukte, sind im Rahmen der Erfindung in extremen Ausführungsvarianten auch folienförmige Körper.

### Bezugszeichenliste

- 1a, 1b... 1n: Behälter (für Pos. 9a, .. 9n)
- 2: erster Mischer (Heizmischer)
- 3: zweiter Mischer (Kühlmischer)
- 4: Doppelbandpresse (Thermofix-Presse)
- 5: Zerkleinerer (Häcksler, Mühle oder dergleichen Vorrichtung)
- 6: Zwischensubstrat (pulverförmiges Gemisch, rieselfähig)
- 7: weitere Doppelbandpresse (für Endprodukt)
- 8: Siebeinrichtung
- 9: Ausgangsstoffe
- 9a: erstes Kunststoffpulver
- 9b: zweites Kunststoffpulver
- 9c: erste Zuschlagstoffe
- 9d: zweite Zuschlagstoffe
- 9e: erster Weichmacher
- 9f: zweiter Weichmacher
- 9g: erste Farbstoffe
- 9h: zweite Farbstoffe
- 9i: erstes Gleitmittel
- 9j: zweites Gleitmittel
- 9k: erste Füllstoffe
- 9l: zweite Füllstoffe
- 9m: erste Additive
- 9n: zweite Additve
- 10: Rohrleitungssystem
- 11: erstes Granulat
- 12: zweites Granulat
- 13: drittes Granulat
- 14: (frei)
- 15: erster Heiz-Kühlmischer
- 16: zweiter Heiz-Kühlmischer
- 17: erstes Zwischenprodukt (formstabiler Körper)
- 18: unteres Band (von Pos. 4)
- 19: thermoplastische Bahn (Endprodukt)
- 20: Granulatlager
- 21: weiteres Zwischensubstrat (pulverförmiges Gemisch, rieselfähig)
- 22: weiteres Zwischenprodukt (formstabiler Körper)
- 23: Komponente (für Pos. 19)
- 24: Grenzschicht

## Patentansprüche

1. Verfahren zur Herstellung eines thermoplastischen Granulates aus mehreren Ausgangsstoffen, wie Kunststoffpulver, Zuschlagstoffe, Weichmacher, Farbstoffe, Farbpigmente, Gleitmittel, Füllstoffe und/oder Additive,
mit den folgenden Verfahrensschritten:
- ausgewählte Ausgangsstoffe (9a, 9b, ... 9n) für das thermoplastische Granulat werden in einem vorbestimmten Mischungsverhältnis dosiert;
- danach wird die Mischung in einem Heiz-Kühlmischer (15), welcher von einem Heizmischer (2) und einem Kühlmischer (3) gebildet ist, weiter gemischt und als rieselfähiges Zwischensubstrat (6; 21) bereit gestellt;
**dadurch gekennzeichnet, dass**
- dann das rieselfähige Zwischensubstrat (6; 21), vorzugsweise ein pulverförmiges Gemisch, einer Doppelbandpresse (4) zugeführt wird indem es auf deren umlaufenden unteren Band (18) flächig aufgestreut wird;
- in der Doppelbandpresse (4) das aufgestreute Zwischensubstrat (6; 21) thermisch und mechanisch behandelt wird, wodurch am Ende der Doppelbandpresse (4) ein einfarbiger oder mehrfarbiger thermoplastischer bahnförmiger formstabiler Körper (17; 22) hergestellt ist,
- und danach der formstabile Körper (17; 22) zu thermoplastischem Granulat (11; 12; 13) zerkleinert wird.

2. Verfahren nach Anspruch 1,
**dadurch gekennzeichnet, dass**
mehrere in ihrer Farbgebung oder ihren physikalischen oder mechanischen oder chemischen Eigenschaften unterschiedliche sowie rieselfähige Zwischensubstrate (6; 21) nacheinander in einem Heiz-Kühlmischer (15) oder in mehreren, parallel geschalteten Heiz-Kühlmischern (15 und 16) erzeugt werden.

3. Verfahren nach Anspruch 1 oder 2,
***dadurch gekennzeichnet, dass***
in ihrer Farbgebung oder ihren physikalischen oder mechanischen oder chemischen Eigenschaften unterschiedliche sowie rieselfähige Zwischensubstrate (6 und 21) abwechselnd aufeinander und/oder nebeneinander auf das umlaufende untere Band (18) der Doppelbandpresse (4) aufgestreut werden, wenigstens zweischichtig.

4. Verfahren nach Anspruch 3,
***dadurch gekennzeichnet, dass***
die laminare Schichtfolge der auf das umlaufende untere Band (18) schichtweise aufgestreuten unterschiedlichen Zwischensubstrate (6 und 21) vor dem Erreichen und/oder während des Durchlaufens einer Heizzone der Doppelbandpresse (4) mittels Störelementen in vertikaler und/oder horizontaler Richtung teilweise bis weitgehend zerstört wird.

5. Verfahren nach Anspruch 1, 2, 3 und/oder 4,
***dadurch gekennzeichnet, dass***
in die auf das umlaufende untere Band (18) der Doppelbandpresse (4) einschichtig oder mehrschichtig aufgestreuten Zwischensubstrate (6 und 21) während des Durchlaufens einer Heizzone der Doppelbandpresse (4), quasi in den sich bildenden Körpers Scherkräfte eingebracht werden.

6. Verfahren nach wenigstens einem der Ansprüche 1 bis 5,
***dadurch gekennzeichnet, dass***
das Zerkleinern des formstabilen Körpers (17; 22) zu thermoplastischem Granulat (11; 12; 13) mittels eines Bandgranulators, einer Stanze, einer Mühle oder Häcksler erfolgt.

7. Anlage zur Herstellung eines thermoplastischen Granulates aus mehreren Ausgangsstoffen, wie Kunststoffpulver, Zuschlagstoffe, Weichmacher, Farbstoffe, Farbpigmente, Gleitmittel, Füllstoffe und/oder Additive,
die
- wenigstens ein Mittel zum Dosieren ausgewählter Ausgangsstoffe (9a, 9b, ... 9n) in einem vorbestimmten Mischungsverhältnis,
- einen Heiz-Kühlmischer (15), der von einem Heizmischer (2) und einem Kühlmischer (3) gebildet ist, zur Herstellung von einem rieselfähigen Zwischensubstrat (6; 21), und
- ein Mittel zur Herstellung von einem formstabilen Körper als Zwischenprodukt (17; 22) aufweist,
***dadurch gekennzeichnet, dass***
das Mittel zur Herstellung des Zwischenproduktes (17; 22) eine Vorrichtung zur Herstellung eines einfarbigen oder mehrfarbigen thermoplastischen bahnförmigen formstabilen Körpers (17; 22) in Ausführung einer Doppelbandpresse (4) ist und selbiger (4) wenigstens ein Zerkleinerer (5) zur Erzeugung von thermoplastischen Granulat (11; 12; 13) aus dem Zwischenprodukt (17; 22) nachgeordnet ist.

8. Anlage nach Anspruch 7,
***dadurch gekennzeichnet, dass***
die Anlage wenigstens einen zweiten Heiz-Kühlmischer (16) hat, welcher parallel zu dem ersten Heiz-Kühlmischer (15) angeordnet ist.

9. Anlage nach Anspruch 7 oder 8,
***dadurch gekennzeichnet, dass***
der Zerkleinerer (5) ein Bandgranulator oder eine Stanze oder eine Mühle, vorzugsweise eine Schlagmühle oder eine Schneidmühle oder eine Walzenmühle oder eine Brockenmühle, oder ein Häcksler ist.

## Claims

1. Method of producing a thermoplastic granulate from a plurality of starting materials such as plastics material powder, aggregates, softeners, colorants, colouring pigments, lubricants, fillers and/or additives, comprising the following method steps:
- selected starting materials (9a, 9b, ... 9n) for the thermoplastic granulate are metered in a predetermined mixture ratio;
- thereafter the mixture is further mixed in a heating/cooling mixer (15), which is formed by a heating mixer (2) and a cooling mixer (3), and prepared as a pourable intermediate substrate (6; 21);
**characterised in that**
- the pourable intermediate substrate (6; 21), preferably a pulverulent mixture, is then fed to a double-belt press (4) **in that** it is dispersed over an area on the circulating lower belt (18) thereof;
- the dispersed intermediate substrate (6; 21) is thermally and mechanically treated in the double-belt press (4), whereby a single-colour or multi-colour thermoplastic strip-shaped shape-stable body (17; 22) is produced at the end of the double-belt press (4), and
- thereafter the shape-stable body (17; 22) is comminuted to form thermoplastic granulate (11; 12; 13).

2. Method according to claim 1, **characterised in that** several pourable intermediate substrates (6; 21) differing in their coloration or their physical or mechanical or chemical properties are produced in succession in a heating/cooling mixer (15) or in a plurality of heating/cooling mixers (15 and 16) connected in parallel.

3. Method according to claim 1 or 2, **characterised in that** pourable intermediate substrates (6 and 21) differing in their coloration and/or physical or mechanical or chemical properties are dispersed in alternation on one another and/or adjacent to one another on the circulating lower belt (18) of the double-belt press (4), at least in double-layer form.

4. Method according to claim 3, **characterised in that** the laminar sequence of the different intermediate substrates (6 and 21) dispersed in layered manner on the circulating lower belt (18) is partly to largely destroyed prior to reaching and/or during transit of a heating zone of the double-belt press (4) by means of interference elements in vertical and/or horizontal direction.

5. Method according to claim 1, 2, 3 and/or 4, **characterised in that** shearing forces are introduced into the intermediate substrates (6 and 21), which are dispersed in single-layer or multi-layer form on the circulating lower belt (18) of the double-belt press (4), during transit of a heating zone of the double-belt press (4), quasi into the body which forms.

6. Method according to at least one of claims 1 to 5, **characterised in that** the comminution of the shape-stable body (17; 22) to form thermoplastic granulate (11; 12; 13) is carried out by means of a belt granulator, a punch, a mill or a chopper.

7. Plant for producing thermoplastic granulate from a plurality of starting substances such as plastics material powder, aggregates, softeners, colorants, colouring pigments, lubricants, fillers and/or additives, which comprises
- at least one means for metering selected starting materials (9a, 9b, ... 9n) in a predetermined mixing ratio,
- a heating/cooling mixer (15), which is formed by a heating mixer (2) and a cooling mixer (3), for production of a pourable intermediate substrate (6; 21), and
- a means for producing a shape-stable body as an intermediate product (17; 22),
**characterised in that**
the means the producing the intermediate product (17; 22) is a device for producing a single-colour or multi-colour thermoplastic strip-shaped shape-stable body (17; 22) in the form of a double-belt press (4) and at least one comminuting device (5) for producing thermoplastic granulate (11; 12; 13) from the intermediate product (17; 22) is arranged downstream of the press (4).

8. Plant according to claim 7, **characterised in that** the plant comprises at least one second heating/cooling mixer (16), which is arranged parallel to the first heating/cooling mixer (15).

9. Plant according to claim 7 or 8, **characterised in that** the comminuting device (5) is a belt granulator or a punch or a mill, preferably a beater mill or a cutting mill or a roller mill or a lump granulator, or a chopper.

## Revendications

1. Procédé de fabrication d'un granulat thermoplastique composé de plusieurs substances de départ telles que de la poudre de matière plastique, des adjuvants, des plastifiants, des colorants, des pigments colorés, des lubrifiants, des substances de charge et/ou des additifs, comprenant les étapes opératoires suivantes :
- des substances de départ sélectionnées (9a, 9b, ...9n), destinées au granulat thermoplastique, sont dosées suivant un rapport de mélange prédéterminé ;
- le mélange est ensuite soumis à une poursuite du malaxage, dans un mélangeur (15) à chauffage-refroidissement constitué d'un mélangeur chauffant (2) et d'un mélangeur réfrigérant (3), puis tenu à disposition en tant que substrat intermédiaire (6 ; 21) à écoulement libre ;
**caractérisé par le fait que**
- le substrat intermédiaire (6 ; 21) à écoulement libre, de préférence un mélange pulvérulent, est ensuite délivré à une presse (4) à double bande en étant répandu, à plat, sur la bande inférieure défilante (18) de ladite presse ;
- ledit substrat intermédiaire répandu (6 ; 21) est traité thermiquement et mécaniquement dans la presse (4) à double bande en produisant ainsi, à l'extrémité de ladite presse (4) à double bande, un corps thermoplastique (17 ; 22) monochrome ou polychrome, se présentant comme une nappe et doué de stabilité de forme,
- après quoi ledit corps (17 ; 22), à stabilité de forme, est broyé pour obtenir un granulat thermoplastique (11 ; 12 ; 13).

2. Procédé selon la revendication 1,
**caractérisé par le fait que**
plusieurs substrats intermédiaires (6 ; 21) à écoulement libre, différant quant à leur coloration ou à leurs propriétés physiques ou mécaniques ou chimiques, sont produits en succession dans un mélangeur (15) à chauffage-refroidissement ou dans plusieurs mélangeurs (15 et 16) à chauffage-refroidissement, agencés en parallèle.

3. Procédé selon la revendication 1 ou 2,
**caractérisé par le fait que**
des substrats intermédiaires (6 et 21) à écoulement libre, différant quant à leur coloration ou à leurs propriétés physiques ou mécaniques ou chimiques, sont alternativement répandus en superposition et/ou en juxtaposition, à raison d'au moins deux couches, sur la bande inférieure défilante (18) de la presse (4) à double bande.

4. Procédé selon la revendication 3,
**caractérisé par le fait que**
la séquence de stratification laminaire des substrats intermédiaires (6 et 21) différents, répandus par couches sur la bande inférieure défilante (18), est détruite dans la (les) direction(s) verticale et/ou horizontale au moyen d'éléments perturbateurs, avec ampleur partielle à conséquente, avant qu'une zone de chauffage de la presse (4) à double bande ne soit atteinte, ou au cours de la circulation par ladite zone.

5. Procédé selon les revendications 1, 2, 3 et/ou 4,
**caractérisé par le fait que**
des forces de cisaillement sont quasiment introduites dans le corps en formation, au cours de la circulation par une zone de chauffage de la presse (4) à double bande, dans les substrats intermédiaires (6 et 21) répandus en une couche, ou en plusieurs couches, sur la bande inférieure défilante (18) de ladite presse (4) à double bande.

6. Procédé selon au moins l'une des revendications 1 à 5,
**caractérisé par le fait que**
le broyage du corps (17 ; 22) à stabilité de forme, en vue d'obtenir un granulat thermoplastique (11 ; 12 ; 13), est effectué au moyen d'un granulateur à bande, d'une poinçonneuse, d'une broyeuse ou d'une déchiqueteuse.

7. Installation dévolue à la fabrication d'un granulat thermoplastique composé de plusieurs substances de départ telles que de la poudre de matière plastique, des adjuvants, des plastifiants, des colorants, des pigments colorés, des lubrifiants, des substances de charge et/ou des additifs,
équipée
- d'au moins un moyen affecté au dosage de substances de départ sélectionnées (9a, 9b, ...9n), suivant un rapport de mélange prédéterminé,
- d'un mélangeur (15) à chauffage-refroidissement constitué d'un mélangeur chauffant (2) et d'un mélangeur réfrigérant (3), en vue de produire un substrat intermédiaire (6 ; 21) à écoulement libre,
et
- d'un moyen dédié à la fabrication d'un corps à stabilité de forme, en tant que produit intermédiaire (17 ; 22),
**caractérisée par le fait que**
le moyen, dédié à la fabrication du produit intermédiaire (17 ; 22), est un dispositif qui est conçu pour produire un corps thermoplastique (17 ; 22) monochrome ou polychrome, se présentant comme une nappe et doué de stabilité de forme, et est réalisé en tant que presse (4) à double bande, en aval de laquelle (4) au moins un broyeur (5) est implanté en vue d'engendrer un granulat thermoplastique (11 ; 12 ; 13) à partir dudit produit intermédiaire (17 ; 22).

8. Installation selon la revendication 7,
**caractérisée par le fait que**
ladite installation est dotée d'au moins un second mélangeur (16) à chauffage-refroidissement, disposé parallèlement au premier mélangeur (15) à chauffage-refroidissement.

9. Installation selon la revendication 7 ou 8,
**caractérisée par le fait que**
le broyeur (5) est un granulateur à bande ou une poinçonneuse ou une broyeuse, de préférence une broyeuse à marteaux ou une broyeuse à couteaux ou une broyeuse à cylindres ou une broyeuse à morceaux, ou bien une déchiqueteuse.
